(19) Europäisches Patentamt
European Patent Office
Office européen des brevets

(11) Veröffentlichungsnummer: **0 025 142**
**B1**

(12) # EUROPÄISCHE PATENTSCHRIFT

(45) Veröffentlichungstag der Patentschrift: **08.08.84**

(51) Int. Cl.³: **C 08 F 8/44**, D 21 H 3/38

(21) Anmeldenummer: **80104898.4**

(22) Anmeldetag: **16.08.80**

(54) **Polyquaternäre Ammoniumverbindungen, ihre Herstellung, ihre Verwendung bei der Papierherstellung und sie enthaltende Papierbehandlungsmittel.**

(30) Priorität: **07.09.79 DE 2936239**

(43) Veröffentlichungstag der Anmeldung: **18.03.81 Patentblatt 81/11**

(45) Bekanntmachung des Hinweises auf die Patenterteilung: **08.08.84 Patentblatt 84/32**

(84) Benannte Vertragsstaaten: **CH DE FR GB LI NL SE**

(56) Entgegenhaltungen:
**DE - A - 2 544 948**
**FR - A - 1 423 767**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Löbach, Wilfried, Dr., Flutgraben 17, D-5300 Bonn 3 (DE)**
Erfinder: **Haas, Peter, Dr., Zwengenberger Strasse 43, D-5657 Haan 1 (DE)**
Erfinder: **Kolb, Günter, Dr., Heinrich-von-Kleist-Strasse 7, D-5090 Leverkusen 1 (DE)**
Erfinder: **Sackmann, Günter, Dr., Steinstrasse 24, D-5090 Leverkusen 3 (DE)**
Erfinder: **Probst, Joachim, Dr., Wolfskaul 1, D-5000 Köln 80 (DE)**

**EP 0 025 142 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft wasserlösliche polyquaternäre Verbindungen, die hergestellt werden durch Imidisierung von

A) alternierenden Copolymerisaten aus Maleinsäureanhydrid und Olefinen der Formel

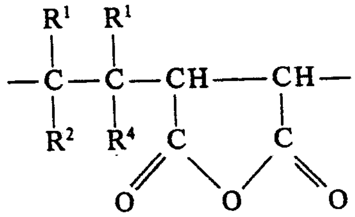

in der
$R^1$, $R^2$, $R^3$, $R^4$ unabhängig voneinander Wasserstoff, $C_1$- bis $C_8$-Alkyl oder Aryl, bevorzugt Phenyl, das gegebenenfalls durch $C_1$- bis $C_4$-Alkyl substituiert ist, darstellen,
mit einem Molekulargewicht von $>5000$ mit

B) Aminen der allgemeinen Formel

$$H_2N-(CH_2)_m-X$$

in der
m eine ganze Zahl zwischen 2 und 5 ist, und
X den Formeln

a)

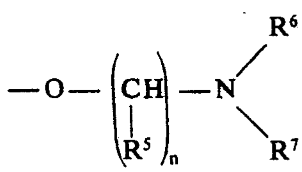

in der
n eine ganze Zahl zwischen 2 und 5,
$R^5$ Wasserstoff oder $C_1$- bis $C_8$-Alkyl, das durch

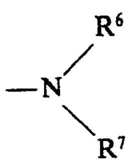

substituiert sein kann, und
$R^6$ und $R^7$ unabhängig voneinander $C_1$- bis $C_5$-Alkyl, das durch Hydroxy substituiert sein kann, oder gemeinsam $C_2$- bis $C_6$-Alkylen darstellen.

b)

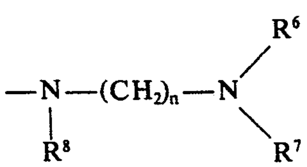

in der
$R^8$ für $C_1$- bis $C_8$-Alkyl oder für den Rest

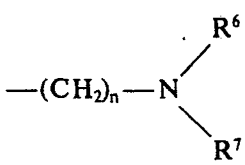

steht, und

n, $R^6$ und $R^7$ die obengenannte Bedeutung haben,

c)

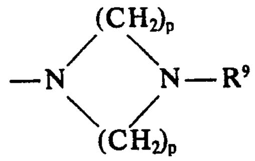

in der

p und q unabhängig voneinander für eine ganze Zahl zwischen 2 und 5 und

$R^9$ für $C_1$- bis $C_8$-Alkyl, das durch Hydroxy substituiert sein kann, oder für den Rest

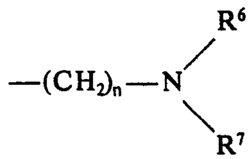

stehen,

d)

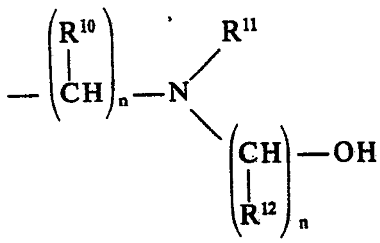

in der

$R^{10}$ und $R^{12}$ unabhängig voneinander für Wasserstoff oder $C_1$- bis $C_8$-Alkyl und

$R^{11}$ für $C_1$- bis $C_5$-Alkyl oder für den Rest

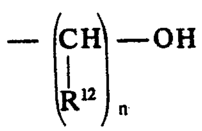

stehen, und

C) Alkylierung des Reaktionsproduktes AB.

Die Erfindung betrifft ferner ein Verfahren zur Herstellung dieser wasserlöslichen Polyammoniumverbindungen und ihrer Verwendung als Mittel zur Verbesserung der Naß- und Trockenreißfestigkeit von Papier, sowie Verbindungen der Formeln

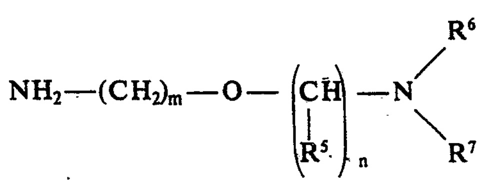
(I)

und

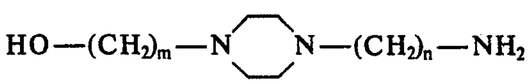
(II)

worin

m, n, $R^5$, $R^6$ und $R^7$ die vorstehend genannte Bedeutung haben.

In der unter A und B genannten Formeln und in den Formeln (I) und (II) stehen bevorzugt $R^1$–$R^4$ für Wasserstoff, Methyl oder Phenyl,

m, n, p und q für 2 oder 3,

$R^5$ für Wasserstoff oder Methyl oder

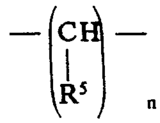

steht für

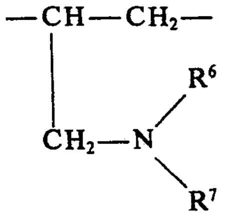

$R^6$ und $R^7$ für Methyl oder Ethyl, oder gemeinsam für Tetramethylen oder Pentamethylen,
$R^8$ für Methyl, Ethyl oder den Rest

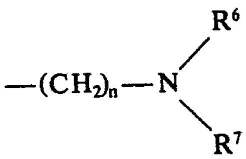

$R^9$ für Methyl, Ethyl, Hydroxyethyl, Hydroxypropyl oder den Rest

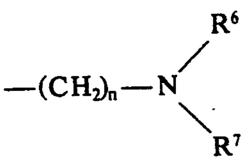

$R^{10}$ und $R^{12}$ für Wasserstoff oder Methyl,
$R^{11}$ für Methyl, Ethyl oder den Rest

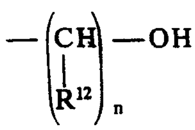

Als Olefinkomponente für die Copolymeren A) kommen insbesondere in Betracht:
Ethylen, Propylen, Butylen, Isobutylen, Pentylen, Diisobutylen, Styrol und Alkylstyrole.
Als Beispiele für die Amine B) seien folgende genannt:

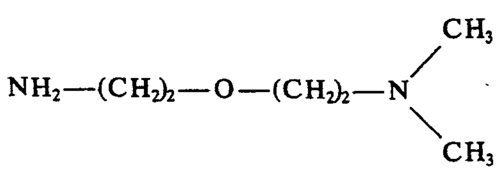

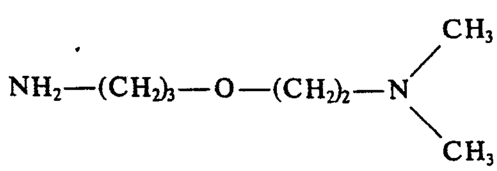

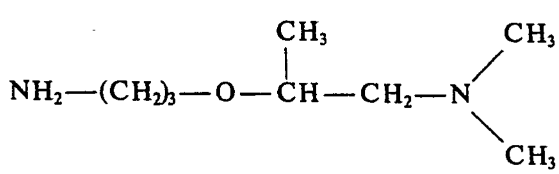

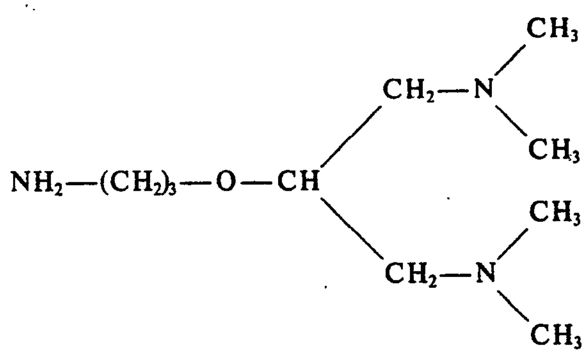

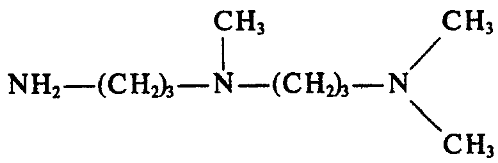

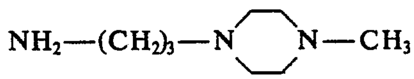

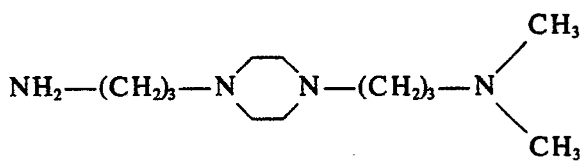

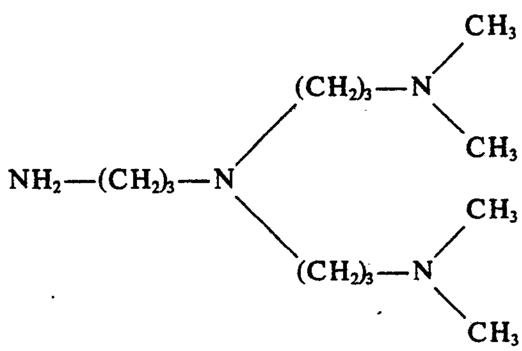

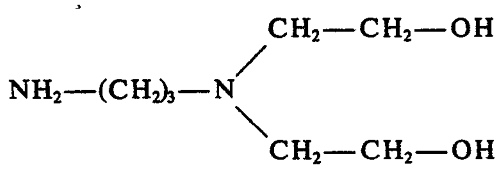

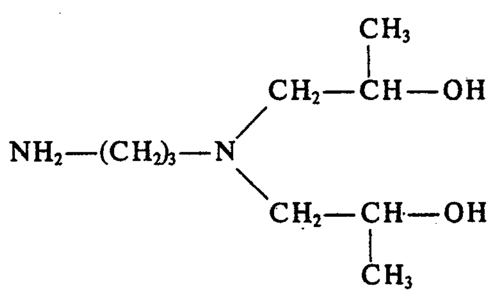

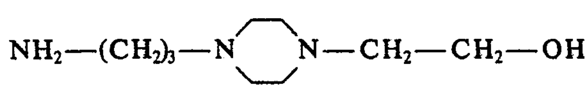

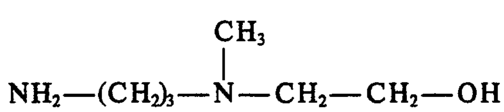

Als Alkylierungsmittel C) können z. B. Alkylhalogenide wie Methyl- oder Ethylchlorid, Methyl- oder Ethylbromid, Alkylsulfate wie Dimethyl- oder Diethylsulfat, oder Arylsulfonate wie Methyl- oder Ethylbenzolsulfonat oder Methyl- oder Ethyltoluolsulfonat und Epihalohydrine, im besonderen Epichlorhydrin, eingesetzt werden. Die mit Epichlorhydrin erhaltenen Produkte sind selbstvernetzend und müssen zur Erzielung einer ausreichenden Lagerstabilität angesäuert werden.

Gemäß FR-A 1 423 767 sind wasserlöslich polyquaternäre Verbindungen bekannt, die jedoch als Trockenmittel für Papier nicht geeignet sind.

Die Herstellung der Copolymerisate erfolgt nach bekannten Verfahren. Die Molgewichte der erfindungsgemäßen Polymerisate können von 10 000 bis 100 000 variiert werden.

Durch Vorversuche läßt sich leicht ermitteln, bei welchem Molgewicht für ein gegebenes Copolymerisat und ein gegebenes Amin nach erfolgter Alkylierung die Grenze der Wasserlöslichkeit liegt. Als allgemeine Regel kann gelten, daß Copolymerisate mit hohem Molekulargewicht Amine mit mehreren tertiären Aminogruppen oder mit Hydroxyalkylaminogruppen benötigen, um noch wasserlöslich zu sein.

Die Imidisierung wird vorteilhafterweise in einem mit Wasser nicht mischbaren hochsiedenden Lösungsmittel wie Xylol, Toluol, Chlorbenzol durchgeführt. Nach erfolgter Wasserabspaltung kann das Lösungsmittel leicht durch Wasserdampfdestillation entfernt werden.

Die Mengenverhältnisse betragen pro Mol primäres Amin zu Anhydridäquivalent bevorzugt 1:1, jedoch ist eine geringe Abweichung von 0,9 :1 bis 1:1,1 ohne wesentlichen Einfluß auf die Wirksamkeit der alkylierten Produkte. Die imidisierten Copolymerisate lassen sich am günstigsten in Form von alkoholischen Lösungen weiterverarbeiten.

Die Alkylierung erfolgt in der Regel bei pH-Werten oberhalb 6, vorzugsweise bei pH 8—9, in wäßrig/alkoholischem Milieu, wobei die z. T. wasserunlöslichen imidisierten Polymerisate in Lösung gehen.

Die Reaktionstemperatur kann zwischen 0° C und 120° C variiert werden in Abhängigkeit von Alkylierungsmittel und dem eingesetzten Amin. Bei der Verwendung der Epihalohydrine arbeitet man bevorzugt bei 20° bis 50° C und bricht die Reaktion durch Säurezugabe ab und stellt sauer, beispielsweise auf einen pH-Wert von 3,0—4,0, so daß keine Vernetzung eintritt und damit wasserunlösliche Produkte entstehen.

Die Mengenverhältnisse Alkylierungsmittel zu basischem Stickstoff betragen vorteilhafterweise zwischen 0,7:1 und 1:1. Dabei erhält man die wasserlöslichsten und wirksamsten Produkte.

Um die Naß- und Trockenfestigkeit von Papier gemäß dem Verfahren der vorliegenden Erfindung zu erhöhen, kann man in an sich bekannter Weise vorgehen, bevorzugt in der Weise, daß man die erfindungsgemäßen Ammoniumverbindungen in Form wäßriger Lösungen bereits der wäßrigen Suspension des Papierrohstoffs zusetzt und die Rohstoffsuspension dann zu Papier verarbeitet. Die Mengen an Ammoniumverbindung, die zur Erzielung der gewünschten Naß- und Trockenfestigkeit erforderlich sind, lassen sich durch Vorversuche ohne Schwierigkeiten ermitteln. Im allgemeinen empfiehlt es sich, auf 1000 Gew.-Teile Papierrohstoff oder Papier 1—100 Gew.-Teile einer wäßrigen Lösung einzusetzen, deren Gehalt an Reaktionsprodukten 10—20 Gew.-% beträgt.

Die sauergestellten Umsetzungsprodukte der imidisierten Copolymerisate mit Epihalohydrinen werden vor ihrem Zusatz zur Papierrohstoffsuspension durch Zugabe von Alkali aktiviert. Die aktivierten Reaktionsprodukte weisen eine ganz besondere Wirksamkeitssteigerung auf.

Umsetzungsprodukte aus imidisierten Copolymeren aus Maleinsäureanhydrid und $\alpha$-Olefinen mit Epichlorhydrin und ihre Verwendung als Papierleimungsmittel sind bereits in der schweizerischen Patentschrift 460 517 bekannt. Zur Herstellung der dort beschriebenen Produkte können wegen der Art der verwendeten Amine jedoch nur Maleinsäureanhydrid-$\alpha$-Olefin-Copolymerisate eingesetzt werden, die Molekulargewichte <5000 besitzen, da die Endprodukte sonst wasserunlöslich werden.

Außerdem weisen Papiere, die mit solchen Substanzen geleimt wurden, nur eine kurzzeitige Verbesserung der Naßreißfestigkeit auf, welche jedoch nach längerem Wässern stark absinkt.

Der Erfindung lag deshalb die Aufgabe zugrunde, wasserlösliche Polyammoniumverbindungen herzustellen, die eine verminderte Leimungswirkung, jedoch eine verbesserte Naß- und Trockenreißfestigkeit aufweisen.

Die Aufgabe wurde durch die Verwendung spezieller Amine gelöst. Es wurde dadurch möglich, mit Ausgangscopolymeren, die höhere Molekulargewichte als 5000 besitzen, polyquaternisierte Produkte zu erhalten, welche zu mehr als 20 Gew.-% in Wasser löslich sind.

Einige erfindungsgemäße Reaktionsprodukte und ihre Verwendung zum Trocknen- und Naßfest-Ausrüsten sind nachstehend beispielsweise beschrieben.

## Herstellungsbeispiele

### Herstellung der Copolymerisate A

Die alternierend ausgebauten Copolymerisate aus Maleinsäureanhydrid und den Monomeren Diisobutylen (2,2,4-Trimethylpenten-1), Isobutylen, Propylen und Styrol wurden nach literaturbekannten

Vorschriften im Lösungs- oder Suspensionsverfahren hergestellt. Die Charakterisierung der Produkte erfolgte durch Molekulargewichtsbestimmungen.

1) Maleinsäureanhydrid/Diisobutylen-Copolymerisat
$\bar{M}_n \approx 20\,000$
2) Maleinsäureanhydrid/Styrol

$\bar{M}_n \approx 34\,700\ [\eta] = 0{,}368\ \left[\frac{dl}{g}\right]$

3) Maleinsäureanhydrid/Isobutylen

$\bar{M}_n \approx 100\,000\ [\eta] = 0{,}86\ \left[\frac{dl}{g}\right]$

4) Maleinsäureanhydrid/Propylen
$\bar{M}_n \approx 50\,000$

Herstellung der Amine B

1) 2-Dimethylaminoethyl-3-aminopropyl-ether
   a) 2-Dimelthylaminoethyl-2-cyanethyl-ether
      Zu 890 g (10 Mol) Dimethylaminoethanol und 0,3 g gelöstem Natrium werden bei Raumtemperatur 530 g Acrylnitril zugetropft. Man läßt 24 Std. stehen und destilliert niedrigsiedende Anteile ab.
      Ausbeute: 1390 g (94% der Theorie)
   b) Hydrierung
      1350 g 2-Dimethylaminoethyl-2-cyanethyl-ether werden in 150 ml Methanol, 800 ml Ammoniak und 120 g Raney-Kobalt bei 110° C hydriert.
      $Kp._{1,2}$: 55° C
      Ausbeute: 1250 g (90% der Theorie)
      Reinheit (nach Gaschromatogramm): 98%
      Äquivalentgewicht: 147, ber. 146.
2) 2-Dimethylamino-1-methyl-ethyl-3-aminopropyl-ether
   a) 2-Dimethylamino-1-methyl-ethyl-2-cyanethyl-ether
      Analog Beispiel 1a aus 412 g (4 Mol) Dimethylamino-2-propanol und 0,3 g gelöstem Natrium mit 212 g Acrylnitril.
      Ausbeute: 604 g (97% der Theorie)
   b) Hydrierung
      604 g 2-Dimethylamino-1-methyl-ethyl-2-cyanethyl-ether werden in 900 ml Methanol, 300 ml Ammoniak, 60 g Raney-Kobalt bei 90° C hydriert.
      $Kp._{0,05}$: 55° C
      Ausbeute: 618 g (100% der Theorie)
      Reinheit (nach Gaschromatogramm): 96%.
3) N-Methyl-N'-aminopropyl-piperazin
   a) N-Methyl-N'-2-cyanethyl-piperazin
      Analog Beispiel 1a aus 500 g (5 Mol) Methylpiperazin in 500 ml Methanol und 265 g (5 Mol) Acrylnitril.
      Ausbeute: Quantitativ
   b) Hydrierung
      Aus 765 g (5 Mol) N-Methyl-N'-2-cyanethylpiperazin in 800 ml Methanol, 400 ml Ammoniak und 80 g Raney-Kobalt bei 90° C.
      $Kp._{0,35}$: 60° C
      Ausbeute: 700 g (87% der Theorie)
      Reinheit (nach Gaschromatogramm): 98,5%.
4) N,N-Bis-(dimethylaminopropyl)1,3-diaminopropan
   a) Bis-(dimethylaminopropyl)-2-cyanethyl)-amin
      Analog Beispiel 1a aus 1870 g (10 Mol) Bis-(Dimethylaminopropyl)-amin und 530 g (10 Mol) Acrylnitril in 1000 ml Methanol.
   b) Hydrierung
      Aus 2400 g Bis-(dimethylaminopropyl)-2-cyanethylamin in 1000 ml Methanol, 800 ml Ammoniak und 90 g Raney-Kobalt bei 100° C.
      $Kp._{0,05}$: 90—95° C
      Ausbeute: 2220 g (91% der Theorie)
      Reinheit (nach Gaschromatogramm): 99%

5) 1,3-Bis-dimethylamino-2-propyl-3-amino-n-propylether

a) 1,3-Bis-dimethylamino-2-propyl-2-cyan-ethylether

Analog Beispiel 1a aus 1022 g (7 Mol) 1,3-Bis-dimethylaminopropanol-2, 0,5 g gelöstem Natrium und 371 g (7 Mol) Acrylnitril.

Ausbeute: quantitativ

b) Hydrierung

500 g 1,3-Bis-dimethylamino-2-propyl-2-cyan-ethylether, 500 ml Ammoniak, 75 g Raney-Kobalt werden bei 90° C und 100 bar hydriert.

$Kp_{0,05}$: 65° C

Ausbeute: 440 g (86% der Theorie)

Reinheit (nach Gaschromatogramm): 93%

6) N,N-Bis-(2-hydroxyethyl)-diaminopropan (1,3)

a) Bis-(2-hydroxyethyl)-cyanethylamin

Aus 210 g (2 Mol) Diethanolamin in 300 ml Methanol und 106 g (2 Mol) Acrylnitril, nach 3 Stunden wird eingeengt.

Ausbeute: quantitativ.

b) Hydrierung

313 g Bis-(2-hydroxyethyl)-cyanethylamin, 60 g Raney-Kobalt, 300 ml Ammoniak werden bei 100° C und 100 bar hydriert.

$Kp_{0,2}$: 135° C

Ausbeute: 250 g (78% der Theorie)

7) N-2-Hydroxyethyl-N'-3-aminopropyl-piperazin

a) N-2-Hydroxyethyl-N'-2-cyanmethyl-piperazin

Aus 650 g (5 Mol) 2-Hydroxyethylpiperazin in 300 ml Methanol und 265 g (5 Mol) Acrylnitril; nach zwei Stunden wird eingeengt.

Ausbeute: quantitativ.

b) Hydrierung

913 g N-2-Hydroxyethyl-N'-2-cyanethyl-piperazin, 130 g Raney-Kobalt und 800 ml Ammoniak werden bei 90° C und 100 bar hydriert.

$Kp_{0,05}$: 122° C

Ausbeute: 706 g (76% der Theorie)

8) N,N-Bis-(2-hydroxy-propyl)-diaminopropan (1,3)

a) Bis-(2-hydroxy-propyl)-cyanethylamin

Aus 515 g (3,86 Mol) Diisopropanolamin in 300 ml Methanol und 204 g (3,86 Mol) Acrylnitril; nach 2 Stunden wird eingeengt.

Ausbeute: quantitativ.

b) Hydrierung

711 g Bis-(2-hydroxy-propyl)-cyanethylamin, 700 ml Methanol, 350 ml Ammoniak und 80 g Raney-Kobalt werden bei 100° C und 70 bar hydriert.

$Kp_{0,8}$: 147° C

Ausbeute: 605 g (83% der Theorie)

Reinheit (nach Gaschromatogramm): 97%

Die Cyanethylierungen erfolgten nach an sich bekannten Methoden gemäß H. A. Bruson, Organic Reactions 5, 79—135 (1949) und P. Kurtz in Houben—Weyl, Bd. VIII, 340—344 (1952).

## Imidisierung der Copolymerisate A mit den Aminen B

### Allgemeine Arbeitsvorschrift

Das Copolymerisat A wird in siedendem Xylol suspendiert. Man tropft schnell pro Äquivalent Anhydrid ein Mol Amin B zu. Man kocht eine Stunde am Wasserabscheider. Dies reicht zur vollständigen Umsetzung aus. Man destilliert das Lösungsmittel mit Wasserdampf ab und trocknet den Rückstand im Vakuum. Ist er besonders klebrig, setzt man die gleiche Gewichtsmenge Isopropanol zu und löst unter Umrühren und leichtem Erwärmen.

1) Aus 105 g A 1 (0,5 Mol Formelgewicht) und 73 g B 1 (0,5 Mol)
N ber.: 8,28% gef.: 8,19%
2) Aus 105 g A 1 (0,5 Mol Formelgewicht) und 80 g B 2 (0,5 Mol)
3) Aus 105 g A 1 (0,5 Mol Formelgewicht) und 78,5 g B 3 (0,5 Mol)

| | | | |
|---|---|---|---|
| ber.: | C 68,76 | H 10,02 | N 12,03 |
| gef.: | C 68,5 | H 10,0 | N 11,5 |

4) Aus 105 g A 1 (0,5 Mol Formelgewicht) und 122 g B 4 (0,5 Mol)
Äquivalentgewicht ber.: 145 gef.: 146

5) Aus 51 g A 2 (0,25 Mol Formelgewicht) und 39,5 g B 3 (0,25 Mol)

| | | | |
|---|---|---|---|
| ber.: | C 70,17 | H 8,19 | N 12,28 |
| gef.: | C 69,4 | H 8,7 | N 12,0 |

6) Aus 77 g A 3 (0,5 Mol Formelgewicht) und 73 g B 1 (0,5 Mol)
N ber.: 9,93 gef.: 9,49

7) Aus 77 g A 3 (0,5 Mol Formelgewicht) und 122 g B 4 (0,5 Mol)

8) Aus 70 g A 4 (0,5 Mol Formelgewicht) und 78,5 g B 3 (0,5 Mol)

| | | | |
|---|---|---|---|
| ber.: | C 64,5 | H 8,96 | N 15,05 |
| gef.: | C 63,7 | H 9,2 | N 14,5 |

9) Aus 70 g A 4 (0,5 Mol Formelgewicht) und 122 g B 4 (0,5 Mol)
Äquivalentgewicht ber.: 122 gef.:127

## Alkylierung der Imidisierungsprodukte AB

### a) Alkylierung mit Epichlorhydrin

### Allgemeine Vorschrift

Das Produkt AB wird mit derselben Gewichtsmenge Isopropanol gelöst. Dann setzt man die doppelte Menge Wasser zu. Dabei fällt das Produkt AB im allgemeinen emulsionsartig aus. Man fügt dann pro Mol tertiäres Amin ein Mol Epichlorhydrin zu. Das Produkt geht dann in Lösung.

Man kondensiert bei 40° C so lange, bis eine Viskosität von ca. 100 mPas erreicht ist, setzt dann so viel konzentrierte Salzsäure zu, daß ein pH-Wert von 3,5 resultiert, und füllt auf eine 20%ige Lösung mit Wasser auf.

C.

1) Aus 27 g AB 1 und 9,2 g Epichlorhydrin
Viskosität 110 mPas/25° C

2) Aus 35 g AB 2 und 9,2 g Epichlorhydrin
Viskosität 98 mPas/25° C

3) Aus 35 g AB 3 und 18 g Epichlorhydrin
Viskosität 130 mPas/25° C

4) Aus 44 g AB 4 und 28 g Epichlorhydrin
Viskosität 122 mPas/25° C

5) Aus 34 g AB 5 und 18 g Epichlorhydrin
Viskosität 80 mPas/25° C

6) Aus 28 g AB 6 und 9,2 g Epichlorhydrin
Viskosität 115 mPas/25° C

7) Aus 38 g AB 7 und 28 g Epichlorhydrin
Viskosität 97 mPas/25° C

8) Aus 28 g AB 8 und 18 g Epichlorhydrin
Viskosität 125 mPas/25° C

9) Aus 37 g AB 9 und 28 g Epichlorhydrin
Viskosität 114 mPas/25° C

### b) Alkylierung mit Dimethylsulfat

Analog a), jedoch pro Mol tertiäres Amin 1 Mol Dimethylsulfat. Man rührt 1 Std. bei 80° C und füllt dann auf eine 20% Lösung auf. Da die so erhaltenen Produkte nicht selbstvernetzend sind, kann auf das Ansäuern verzichtet werden.

10) Aus 38 g AB 7 und 38 g Dimethylsulfat
Viskosität 50 mPas/25° C

11) Aus 37 g AB 9 und 38 g Dimethylsulfat
Viskosität 30 mPas/25° C

Anwendungsbeispiel

100 kg einer in üblicher Weise bereiteten 0,25%igen Suspension einer Mischung aus 84 Gew.-Teilen gebleichtem Sulfitzellstoff mit einem Mahlgrad von 35° Schopper-Riegler und 16 Gew.-Teilen Titandioxid werden mit 20 g der 5%igen auf pH 8 eingestellten Reaktionsprodukte C 1—9 versetzt. Von den Produkten C 10 und 11 wurden 5 g der 20%igen Lösung ohne Aktivierung eingesetzt. Die Papierrohstoffsuspensin wird dann mit 500 kg Wasser verdünnt und bei einem pH-Wert von 6—7 auf einem Blattbildner (Rapid-Köthen-Gerät) zu Papier mit einem Flächengewicht von 80 g/m² verarbeitet, wobei das gebildete Papier zunächst bei 95° C 5 min im Vakuum bei einem Druck von 20 mm/Hg getrocknet und dann noch 10 min auf 110° C erhitzt wird.

Das so erhaltene Papier weist gegenüber Papier, das mit Naßfestmitteln auf Polyamidamin-Epichlorhydrin-Basis, z. B. nach US-PS 3 640 840 Beispiel 1b) hergestellt wurde, bei Einsatz der Produkte AB 1—9 eine verbesserte Naß- und Trockenfestigkeit und bei Einsatz der Produkte 10 und 11 eine verbesserte Trockenfestigkeit auf.

Die Erhöhung der Naß- und Trockenfestigkeit ist aus der Tabelle ersichtlich.

Tabelle

| Reaktionsprodukt | Bruchlast trocken | (Newton) naß |
|---|---|---|
| Ohne | 412 | 32 |
| Vergleichsbeispiel 1b der US-PS 3 640 840 | 620 | 117 |
| 1 | 655 | 154 |
| 2 | 678 | 166 |
| 3 | 632 | 142 |
| 4 | 932 | 219 |
| 5 | 802 | 183 |
| 6 | 760 | 163 |
| 7 | 918 | 213 |
| 8 | 822 | 191 |
| 9 | 912 | 208 |
| 10 | 680 | 98 |
| 11 | 671 | 93 |

**Patentansprüche**

1. Wasserlösliche polyquaternäre Verbindungen, erhalten durch Umsetzung von

A) Copolymeren aus Maleinsäureanhydrid und Olefinen der Formel

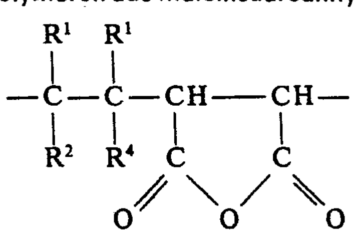

in der

$R^1$, $R^2$, $R^3$, $R^4$ unabhängig voneinander Wasserstoff, $C_1$- bis $C_8$-Alkyl oder ein Arylrest, bevorzugt Phenyl, das gegebenenfalls durch $C_1$- bis $C_4$-Alkyl substituiert ist, darstellen,

mit einem Molekulargewicht von > 5000 mit

B) Aminen der allgemeinen Formel

$$H_2N-(CH_2)_m-X$$

in welcher

m eine ganze Zahl zwischen 2 und 5 ist, und

X den Formeln

a)

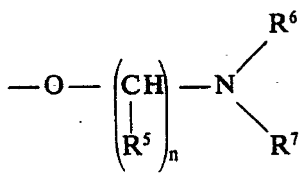

in der

n eine ganze Zahl zwischen 2 und 5,

$R^5$ Wasserstoff oder $C_1$- bis $C_8$-Alkyl, das durch

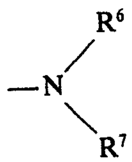

substituiert sein kann, und

$R^6$ und $R^7$ unabhängig voneinander $C_1$- bis $C_5$-Alkyl, das durch Hydroxy substituiert sein kann, oder gemeinsam $C_2$- bis $C_6$-Alkylen darstellen

b)

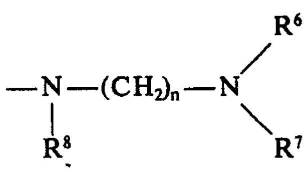

in der

$R^8$ für $C_1$- bis $C_8$-Alkyl oder für den Rest

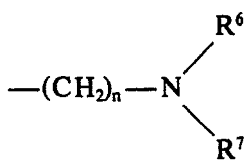

steht, und

n, $R^6$ und $R^7$ die oben genannte Bedeutung haben,

c)

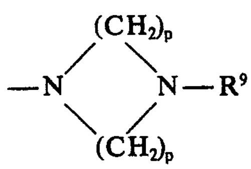

in der

p und q unabhängig voneinander eine ganze Zahl zwischen 2 und 5 und

$R^9$ für $C_1$- bis $C_8$-Alkyl, das durch Hydroxy substituiert sein kann, oder für den Rest

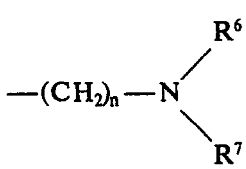

stehen,

d)

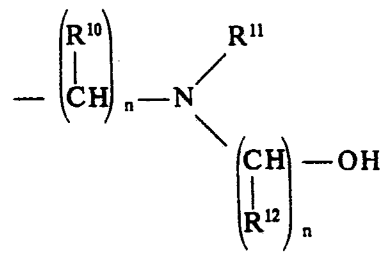

in der
$R^{10}$ und $R^{12}$ unabhängig voneinander für Wasserstoff oder $C_1$- bis $C_8$-Alkyl und
$R^{11}$ für $C_1$- bis $C_5$-Alkyl oder für den Rest

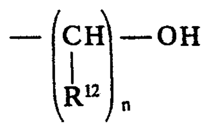

stehen,
und

C) Alkylierung.

2. Wasserlösliche polyquaternäre Verbindungen gemäß Anspruch 1, dadurch gekennzeichnet, daß sie ein mittleres Molgewicht von mindestens 10 000 aufweisen.

3. Wasserlösliche polyquaternäre Verbindungen gemäß Anspruch 1, dadurch gekennzeichnet, daß als Copolymerisate A Copolymerisate aus Maleinsäureanhydrid Styrol, Maleinsäureanhydrid/Diisobutylen, Maleinsäureanhydrid/Isobutylen, Maleinsäureanhydrid/Propylen eingesetzt werden.

4. Wasserlösliche polyquaternäre Verbindungen gemäß Anspruch 1, dadurch gekennzeichnet, daß als Amine B 2-Dimethylaminoethyl-3-aminopropyl-ether, 2-Dimethylamino-1-methyl-ethyl-3-amino-propyl-ether, N-Methyl-N'-3-amino-propyl-piperazin und N,N-Bis-(dimethylaminopropyl)-1,3-diaminopropan eingesetzt werden.

5. Wasserlösliche polyquaternäre Verbindungen gemäß Anspruch 1, dadurch gekennzeichnet, daß als Alkylierungsmittel C Dimethylsulfat und/oder Epichlorhydrin eingesetzt wird.

6. Verwendung der wasserlöslichen Polyamine nach Anspruch 1 bei der Papierherstellung.

7. Verbindungen der allgemeinen Formel

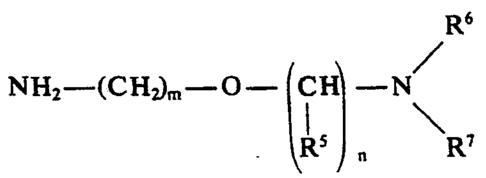

in der
m und n unabhängig voneinander eine ganze Zahl zwischen 2 und 5,
$R^5$ Wasserstoff oder $C_1$- bis $C_8$-Alkyl, das durch

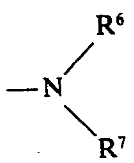

substituiert sein kann, und
$R^6$ und $R^7$ unabhängig voneinander $C_1$- bis $C_5$-Alkyl, das durch Hydroxy substituiert sein kann, oder gemeinsam $C_2$- bis $C_6$-Alkylen darstellen.

8. Verbindungen der allgemeinen Formel

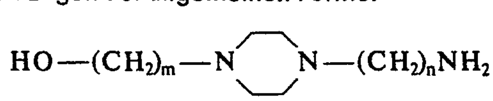

in der
m und n die in Anspruch 7 angegebene Bedeutung haben.

## Claims

1. Water-soluble polyquaternary compounds obtained by reaction of

A) copolymers of maleic anhydride and olefines of the formula

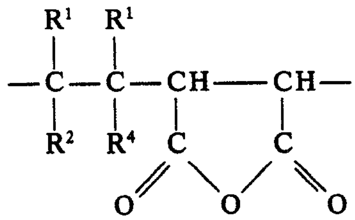

in which
$R^1$, $R^2$, $R^3$ and $R^4$ independently of one another represent hydrogen, $C_1$- to $C_8$-alkyl or an aryl radical, preferably phenyl, which is optionally substituted by $C_1$- to $C_4$-alkyl,
with a molecular weight of $>5{,}000$ with

B) amines of the general formula

$$H_2N-(CH_2)_m-X$$

in which
m is an integer between 2 and 5 and
X the formulae

a)

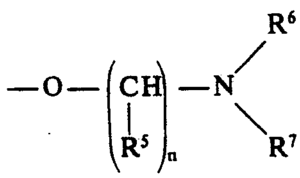

in which
n represents an integer between 2 and 5,
$R^5$ represents hydrogen or $C_1$- to $C_8$-alkyl which can be substituted by

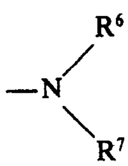

and
$R^6$ and $R^7$ independently of one another represent $C_1$- to $C_5$-alkyl, which can be substituted by hydroxyl, or together represent $C_2$- to $C_6$-alkylene,

b)

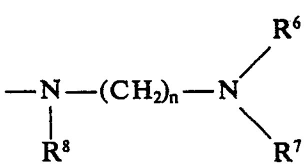

in which
$R^8$ represents $C_1$- to $C_8$-alkyl or the radical

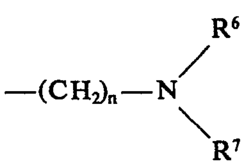

and
n, $R^6$ and $R^7$ have the abovementioned meaning,

c)

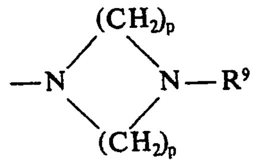

in which
p and q idependently of one another stand an integer between 2 and 5 and
$R^9$ represents $C_1$- to $C_8$-alkyl, which can be substituted by hydroxyl, or the radical

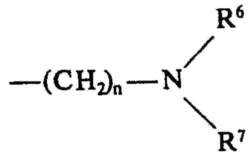

or
d)

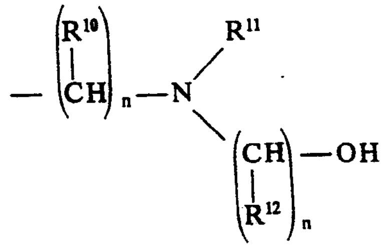

in which
$R^{10}$ and $R^{12}$ in independently of one another represent hydrogen or $C_1$- to $C_8$-alkyl and
$R^{11}$ represents $C_1$- to $C_5$-alkyl or the radical

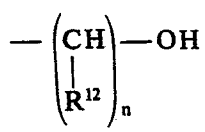

and
C) alkylation.

2. Water-soluble polyquaternary compounds according to Claim 1, characterised in that they have and average molecular weight of at least 10,000.

3. Water-soluble polyquaternary compounds according to Claim 1, characterised in that copolymers of maleic anhydride/styrene, maleic anhydride/diisobutylene, maleic anhydride/isobutylene or maleic anhydride/propylene are employed as the copolymers A.

4. Water-soluble polyquaternary compounds according to Claim 1, characterised in that 2-dimethylaminoethyl 3-aminopropyl ether, 2-dimethylamino-1-methylethyl 3-amino-propyl ether, N-methyl-N′-3-amino-propylpiperazine and N,N-bis-(dimethylaminopropyl)-1,3-diaminopropane are employed as the amines B.

5. Water-soluble polyquaternary compounds according to Claim 1, characterised in that dimethyl sulphate and/or epichlorohydrin is employed as the alkylating agent C.

6. Use of the water-soluble polyamines according to Claim 1 in the production of paper.

7. Compounds of the general formula

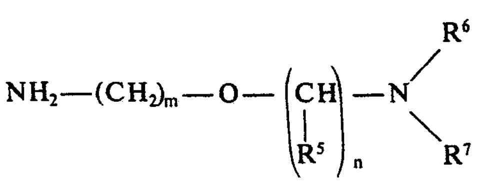

in which
m and n independently of one another represent an integer between 2 and 5,
$R^5$ represents hydrogen or $C_1$- to $C_8$-alkyl, which can be substituted by

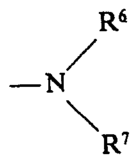

and

$R^6$ and $R^7$ independently of one another represent $C_1$- to $C_5$-alkyl, which can be substituted by hydroxyl, or together represent $C_2$- to $C_6$-alkylene.

8. Compounds of the general formula

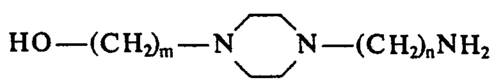

in which

m and n have the meaning indicated in Claim 7.

**Revendications**

1. Composés polyquaternaires hydrosolubles, obtenus par réaction

A) de copolymères d'anhydride d'acide maléique et d'oléfines de formule

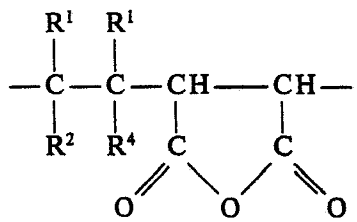

dans laquelle

$R^1$, $R^2$, $R^3$, $R^4$ représentent indépendamment l'un de l'autre de l'hydrogène, un groupe alkyle en $C_1$ à $C_8$ ou un reste aryle, de préférence phényle, qui est éventuellement substitué par un un radical alkyle en $C_1$ à $C_4$

de poids moléculaire supérieur à 5000 avec

B) des amines de formule générale

$$H_2N-(CH_2)_m-X$$

dans laquelle

m est un nombre entier de 2 à 5 et

X répond aux formules

a)

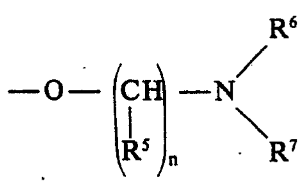

dans laquelle

n est un nombre entier compris entre 2 et 5,

$R^5$ est l'hydrogène ou un groupe alkyle en $C_1$ à $C_8$ qui peut être substitué par un radical

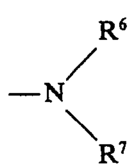

et

$R^6$ et $R^7$ représentent indépendamment l'un de l'autre un groupe alkyle en $C_1$ à $C_5$ qui peut être

substitué par un radical hydroxy, ou forment ensemble un groupe alkylène en $C_2$ à $C_6$

b)

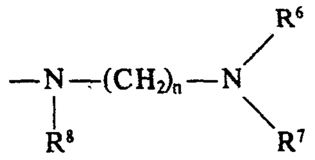

dans laquelle

$R^8$ est un groupe alkyle en $C_1$ à $C_8$ ou le reste

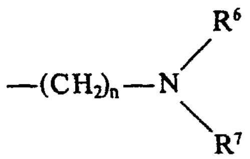

et

n, $R^6$ et $R^7$ ont la définition donnée ci-dessus,

c)

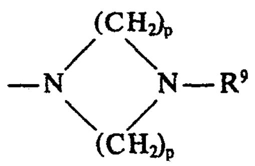

dans laquelle

p et q représentent indépendamment l'un de l'autre un nombre entier de 2 à 5 et

$R^9$ est un groupe alkyle en $C_1$ à $C_8$ qui peut être substitué par un radical hydroxy, ou représente le reste

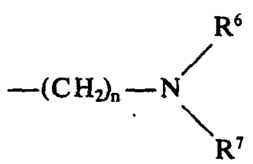

d)

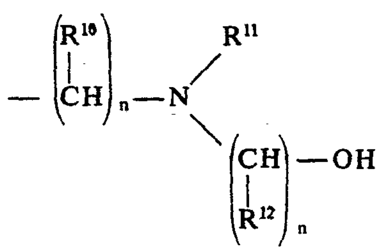

dans laquelle

$R^{10}$ et $R^{12}$ représentent indépendamment l'un de l'autre l'hydrogène ou un groupe alkyle en $C_1$ à $C_8$ et

$R^{11}$ représente un reste alkyle en $C_1$ à $C_5$ ou le reste

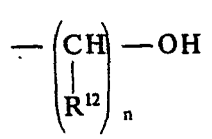

et

C) alkylation.

2. Composés polyquaternaires hydrosolubles suivant la revendication 1, caractérisés en ce qu'ils

présentent un poids moléculaire moyen d'au moins 10 000.

3. Composés polyquaternaires hydrosolubles suivant la revendication 1, caractérisés en ce qu'on utilise comme copolymère A des copolymères d'anhydride maléique/styrène, d'anhydride maléique/diisobutylène, d'anhydride maléique/isobutylène, d'anhydride maléique/propylène.

4. Composés polyquaternaires hydrosolubles suivant la revendication 1, caractérisés en ce qu'on utilise comme amines B l'éther de 2-diméthylaminoéthyl-3-aminopropyle, l'éther de 2-diméthylamino-1-méthyléthyl-3-aminopropyle, la N-méthyl-N'-3-aminopropylpipérazine et le N,N-bis-(diméthylaminopropyl)-1,3-diaminopropane.

5. Composés polyquaternaires hydrosolubles suivant la revendication 1, caractérisés en ce qu'on utilise comme agent d'alkylation C le sulfate de diméthyle et/ou l'épichlorhydrine.

6. Utilisation des polyamines hydrosolubles suivant la revendication 1 dans la fabrication du papier.

7. Composés de formule générale

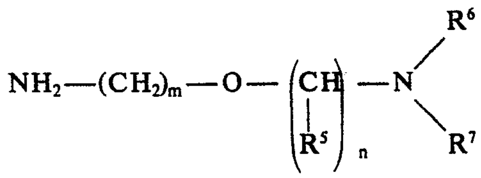

dans laquelle
m et n représentent indépendamment l'un de l'autre un nombre entier de 2 à 5
$R^5$ est l'hydrogène ou un groupe alkyle en $C_1$ à $C_8$ qui peut être substitué par un radical

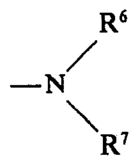

et
$R^6$ et $R^7$ représentent indépendamment l'un de l'autre un groupe alkyle en $C_1$ à $C_5$ qui peut être substitué par un radical hydroxy, ou forment ensemble un groupe alkylène en $C_2$ à $C_6$.

8. Composés de formule générale

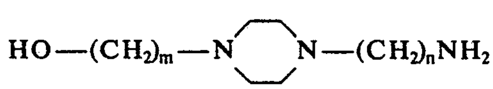

dans laquelle
m et n ont la définition indiquée dans la revendication 7.